# EUROPÄISCHE PATENTSCHRIFT

(11) **EP 1 818 548 B1**
(45) Veröffentlichungstag und Bekanntmachung des Hinweises auf die Patenterteilung: **07.09.2011**
(21) Anmeldenummer: 07101551.5
(22) Anmeldetag: 01.02.2007
(51) Int. Cl.: F16B 2/10, F16B 2/24

(54) **Halterungsvorrichtung für Leitungsmodule**
Mounting for conduit modules
Dispositif de fixation pour modules de conduites

(30) Priorität: 13.02.2006 DE 102006000062
(43) Veröffentlichungstag der Anmeldung: 15.08.2007
(73) Patentinhaber: HILTI Aktiengesellschaft, 9494 Schaan (LI)
(72) Erfinder: Steingruber, Adrian, 86830 Schwabmünchen (DE); Hermann, Fritz, 86899 Landsberg (DE)
(74) Vertreter: Wildi, Roland

(56) Entgegenhaltungen:
- DE-A1- 19 756 456
- FR-A- 1 586 824
- FR-A- 2 716 242

## Beschreibung

Die Erfindung betrifft eine Halterungsvorrichtung gemäss dem Oberbegriff des Anspruchs 1. Eine solche Haltevorrichtung kann zum Beispiel zur Befestigung von Unterkonstruktionen, beispielsweise mit Trägerschienen an denen Leitungen für Gas, Wasser, Strom, Lüftung, Telefon oder Datenübertragung gehalten sind, dienen. Alternativ können die Unterkonstruktionen aber auch durch die Leitungen selbst beziehungsweise deren Isolierungen oder Schutzrohre, gebildet sein. Die Halterungsvorrichtung weist dabei ein Trägerelement auf, das an einem Konstruktionsteil, wie beispielsweise einer Decke, einem Träger, einer Wand, einer Stütze oder einem Boden festlegbar ist und zwar beispielsweise durch eine Schraub-, Nagel-, Schweiss- oder Klebeverbindung. Ferner weist die Halterungsvorrichtung ein Schliesselement auf, das in einer Schwenkebene gegenüber dem Trägerelement zwischen einer Schliessposition und einer Offenposition verschwenkbar ist. In der Schliessposition umschliesst das Schliesselement dabei zusammen mit dem Trägerelement einen Aufnahmequerschnitt umfänglich, während es in der Offenposition den Aufnahmequerschnitt umfänglich nach Aussen öffnet. Zudem weist die Halterungsvorrichtung eine lösbare Festlegeanordnung auf, mittels der das Schliesselement in der Schliessposition festlegbar ist und die bewegliche Festlegemittel an dem Schliesselement und feste Festlegemittel an dem Trägerelement aufweist Dabei ist das Schliesselement wenigstens an den beweglichen Festlegemitteln quer zur Schwenkebene verlagerbar.

Derartige Halterungsvorrichtungen ermöglichen eine erleichterte Montage der Leitungsmodule, bei der die betreffenden Leitungen beispielsweise zusammen mit benötigten Isolierungen an Trägerelementen einer Unterkonstruktion vormontiert werden können. Die Halterungsvorrichtungen werden mittels des jeweiligen Trägerelementes ebenfalls vorab an betreffenden Konstruktionsteilen befestigt und das Schliesselement in die Offenposition verbracht. Anschliessend wird die komplette Unterkonstruktion in die offen stehende Halterungsvorrichtung gehoben. Sobald der Querschnitt der Unterkonstruktion vollständig innerhalb des Aufnahmequerschnittes positioniert ist, kann nun das Schliesselement in die Schliessposition verbracht werden, um die Unterkonstruktion an der Halterungsvorrichtung zu sichern.

Aus der DE 200 04 342 U ist eine Sammelhalterung für Kabel, Rohre oder dergleichen bekannt, die aus einem zu einem rechteckigen Ring schliessbaren Bügel besteht. Hierzu weist der Bügel an einer Seite eine Klappe auf, die um ein durch Materialschwächung gebildetes Scharnier schwenkbar ist, wodurch sich die Sammelhalterung öffnen lässt. Nach Aufnahme der betreffenden Kabel oder Rohre wird die Klappe wieder geschlossen. Hierzu weist die Klappe zwei Haken auf, die durch Druck auf ein in einen Eingriffschlitz eingeführtes Werkzeug in eine hintergreifende Stellung an entsprechenden Aufnahmen verbracht werden können beziehungsweise aus der hintergreifenden Stellung gelöst werden können.

Nachteilig an der bekannten Halterungsvorrichtung ist, dass das hier gezeigte Schliesselement nur unter Zuhilfenahme eines Werkzeuges in die Schliessposition verbracht beziehungsweise aus dieser gelöst werden kann. Dabei führt ein mehrfaches Verbringen und Lösen des Schliesselementes in die beziehungsweise aus der Schliessposition unweigerlich zu zunehmenden plastischen Verformungen, die das Schliessen und Öffnen zunehmend erschweren und schliesslich verhindern.

Aus der FR 1 586 824 ist eine Halterungsvorrichtung mit einem Trägerelement und mit einem Schliesselement bekannt, das zwei verschwenkbare, sich überkreuzende Federbügel aufweist. Die Federbügel sind quer zur Schwenkebene verlagerbar und an die Schwenkebene schneidenden Anschlagflächen am Trägerelement anlegbar. Die Anschlagflächen am Trägerelement sind durch Hintergreifaufnahmen gebildet, welche einander abgewandt geöffnet sind.

DE 197 56 456 A1 zeigt eine Fassungseinrichtung für die Lampe eines Fahrzeugscheinwerfers, bei der die Lampe über eine U-förmige Haltefeder gesichert ist. Die schwenkbar angebrachte Feder weist an ihrem die Schenkel verbindenden Steg eine Ausbuchtung auf, die in einer in einem Vorsprung eingebrachten Lagerschale angeordnet ist. Mittels hakenförmiger Halteelemente wird die Feder in einem gespannten Zustand zur Fixierung der Lampe gehalten.

Der vorliegenden Erfindung liegt die Aufgabe zugrunde, bei einer Halterungsvorrichtung für Leitungsmodule die genannten Nachteile zu vermeiden und dauerhaft ein werkzeugfreies Öffnen und Schliessen zu ermöglichen.

Erfindungsgemäss wird die Aufgabe dadurch gelöst, dass an dem Trägerelement ein Sicherungsmittel beweglich gehalten ist, das in einer Sicherungsposition einen quer zur Schwenkebene wirkenden Anschlag für das Schliesselement bildet.

Nach der Erfindung ist vorgesehen, dass das Schliesselement wenigstens im Bereich der beweglichen Festlegemitteln quer zur Schwenkebene verlagerbar ist. Hierdurch können die beweglichen Festlegemittel besonders einfach von den festen Festlegemitteln getrennt beziehungsweise mit diesen verbunden werden, um das Schliesselement in die Offenposition beziehungsweise in die Schliessposition zu verbringen. Auf diese Weise können die für den jeweiligen Positionswechsel erforderlichen Verformungen am Schliesselement minimiert oder gänzlich vermieden werden, wodurch wiederum plastische Verformungen verhindert werden können, aus denen Funktionsstörungen am Schliesselement entstehen könnten. Somit kann die Halterungsvorrichtung dauerhaft werkzeugfrei geöffnet und geschlossen werden.

In einer besonders bevorzugten Ausführungsform weisen die beweglichen Festlegemittel einen Federbügel auf, der um eine senkrecht zur Schwenkebene stehende Schwenkachse verdrehbar gehalten und von der Schwenkebene weg elastisch verformbar ist. Hierdurch sind die Festlegemittel wenigstens teilweise in die Schwenkebene vorgespannt, in der diese mit den festen Festlegemitteln des Trägerelementes zusammenwirkt. Auf diese Weise kann das Schliesselement zuverlässig in der Schliessposition gehalten werden.

Vorteilhafterweise weisen die festen Festlegemittel am Trägerelement eine die Schwenkebene schneidende Anschlagfläche auf, an die der Federbügel in Richtung der Offenposition anlegbar ist. Somit können die festen Festlegemittel in besonders einfacher und kostengünstiger Weise hergestellt werden, beispielsweise durch Ausnehmungen am Trägerelement.

Bevorzugterweise ist an den festen Festlegemitteln eine Rampenfläche vorgesehen, die sich schräg von der Schwenkebene weg erstreckt und mit der Anschlagfläche verbunden ist. Auf diese Weise wird der Federbügel allein durch Verschwenken um die Schwenkachse mittels der Anschlagfläche von der Schwenkebene weg gedrückt, bis er die Höhe der Anschlagfläche passiert hat. Hier schwenkt der Federbügel in Folge seiner elastischen Rückstellkräfte wieder in die Schwenkebene, wo er nun die Anschlagfläche hintergreift. Somit kann das Schliesselement hierdurch in besonders komfortabler Weise in die Schliessposition verbracht werden.

Erfindungsgemäss ist an dem Trägerelement ein Sicherungsmittel beweglich gehalten, das in einer Sicherungsposition einen quer zur Schwenkebene wirkenden Anschlag für das Schliesselement bildet, wodurch verhindert werden kann, dass das Schliesselement versehentlich aus der Schliessposition in die Offenposition verbracht wird.

Ferner weisen die beweglichen Festlegemittel vorteilhafterweise einen zweiten Federbügel auf, der an eine zweite Anschlagfläche anlegbar ist, wobei beide Anschlagflächen durch Hintergreifaufnahmen gebildet sind, die zueinander hin geöffnet sind. Durch diese paarweise Anordnung der Federbügel beziehungsweise der Anschlagflächen erreicht man einerseits, dass das Schliesselement in der Schliessposition besonders stabil vom Trägerelement abgestützt wird. Andererseits ermöglichen die einander gegenüberliegenden Hintergreifaufnahmen ein besonders komfortables Lösen der Festlegeeinrichtung durch Zusammendrücken beider Federbügel mit einer Hand, so dass diese nicht mehr an der jeweiligen Anschlagfläche anliegen und folglich das Schliesselement um die Schwenkachse herum in die Offenstellung verschwenkt werden kann.

Besonders günstig ist es, wenn das Schliesselement aus einem beispielsweise im Wesentlichen U-förmigen Federstahldraht gebildet ist, dessen Schenkel die Federbügel bilden. Hierdurch kann das Schliesselement mit den beweglichen Festlegemitteln in besonders kostengünstiger Weise und mit einer geeigneten Elastizität hergestellt werden.

Ferner ist es günstig, wenn sich das Schliesselement über eine vollständige Seitenlänge des Aufnahmeraumes erstreckt. Hierdurch kann das betreffende Leitungsmodul in komfortabler Weise in den Aufnahmequerschnitt hinein beziehungsweise aus diesem heraus bewegt werden, ohne dass es zu Verkantungen kommt.

Die Erfindung wird nachstehend anhand eines Ausführungsbeispieles näher erläutert. Es zeigen:
- Fig. 1 1: eine Ansicht einer erfindungsgemässen Halterungsvorrichtung mit einem Schliesselement in Offenposition,
- Fig. 2: eine Ansicht der Halterungsvorrichtung nach Fig. 1 mit verschwenktem Schliesselement,
- Fig. 3: eine Ansicht der Halterungsvorrichtung nach Fig. 1 mit dem Schliesselement in Schliessposition,
- Fig. 4: eine teilweise geschnittene Draufsicht auf eine Festlegeanordnung der Halterungsvorrichtung nach Fig. 1,
- Fig. 5: eine Draufsicht auf eine alternative Festlegeanordnung in Sicherungsposition und
- Fig. 6: eine Draufsicht auf die Festlegeanordnung nach Fig. 5 in Entsicherungsposition.

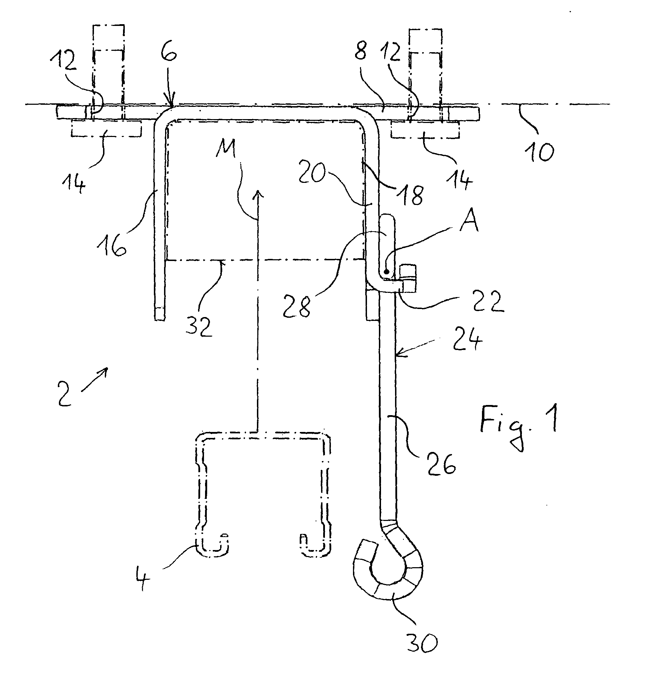

Fig. 1 zeigt eine Halterungsvorrichtung 2, an der eine Trägerschiene 4 einer nicht weiter dargestellten Unterkonstruktion, insbesondere zum Abhängen einer oder mehrerer Leitungen festlegbar ist. Die Halterungsvorrichtung 2 weist hierbei ein Trägerelement 6 in Form eines Stanz-Biege-Teils auf, das über ein plattenförmiges Anlegeteil 8 an einem Konstruktionsteil 10 in Form einer Bauwerksdecke anliegt. In das Anlegeteil 8 sind zwei Bohrungen 12 eingelassen, durch die zwei Schrauben 14 hindurchragen, die mit dem Konstruktionsteil 10 verschraubt sind.

Ferner bildet das Trägerelement 6 ein im Wesentlichen U-förmiges Aufnahmeteil 16 aus, das einen Aufnahmequerschnitt 18 zu drei Seiten begrenzt. An einem ersten Schenkel 20 des Aufnahmeteils 16 ist ein Abstützflansch 22 ausgebildet an dem ein Schliesselement 24 um eine Schwenkachse A herum verschwenkbar und unverlierbar gelagert ist. Das Schliesselement 24 ist dabei durch einen im Wesentlichen U-förmig gebogenen Federstahldraht gebildet, der zwei zueinander im Wesentlichen parallel ausgerichtete stabförmige Federbügel 26 ausbildet, die über einen Verbindungsabschnitt 28 miteinander verbunden sind und die an ihrem freien Ende jeweils einen schlaufenförmigen Betätigungsabschnitt 30 aufweisen.

Es wird darauf hingewiesen, dass aus den Fig. 1 bis 3 jeweils nur ein Federbügel 26 zu entnehmen ist, da bei dieser Ansicht der hintere Federbügel 26 durch den vorderen Federbügel 26 verdeckt ist.

Fig. 1 zeigt das Schliesselement 24 in einer Offenposition, in der der Aufnahmequerschnitt 18 an einer Zutrittsseite 32 vollständig nach Aussen hin geöffnet ist. Somit kann die Trägerschiene 4 entlang einer Montagerichtung M in den Aufnahmequerschnitt 18 verbracht werden.

Sobald die Trägerschiene 4 im Aufnahmequerschnitt 18 angeordnet ist, wird das Schliesselement 24 entlang einer Schwenkrichtung R um die Schwenkachse A herum verschwenkt. Dabei kann die Trägerschiene 4 mit einer Hand im Aufnahmequerschnitt 18 gehalten werden, während die andere Hand das Schliesselement 24 beispielsweise über wenigstens einen der Betätigungsabschnitte 30 bewegt.

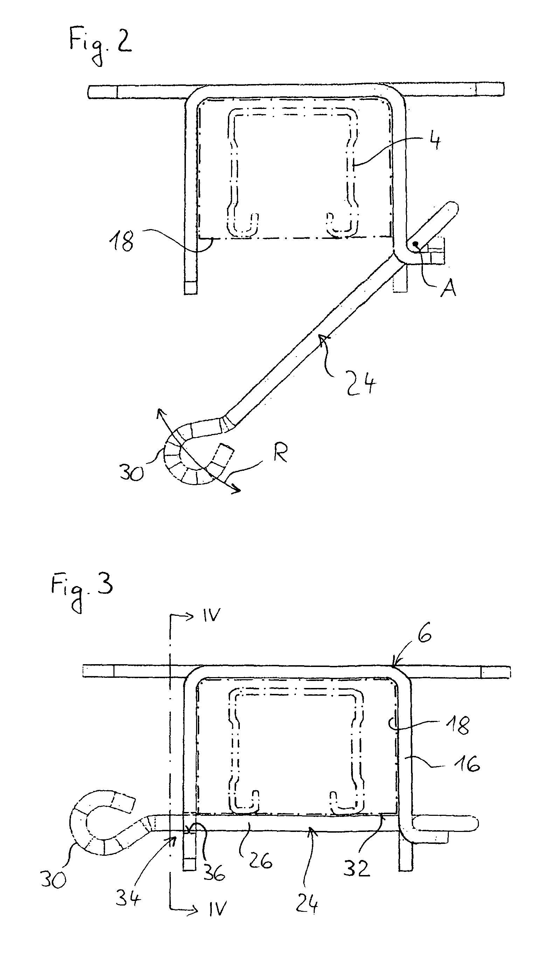

Fig. 3 zeigt das Schliesselement 24 nun in einer Schliessposition, in der die Federbügel 26 an der Zutrittsseite 32 angeordnet sind und der Aufnahmequerschnitt 18 somit durch das Aufnahmeteil 16 und das Schliesselement 24 umfänglich vollständig umschlossen ist. Das Schliesselement 24 ist hierbei über eine insgesamt mit 34 bezeichnete Festlegeanordnung an dem Trägerelement 6 festgelegt. Hierzu weist die Festlegeanordnung 34 feste Festlegemittel in Form von Anschlagflächen 36 auf, an die die Federbügel 26 in Richtung der Offenposition anlegbar sind. Die Federbügel 26 fungieren dabei als bewegliche Festlegemittel der Festlegeanordnung 34.

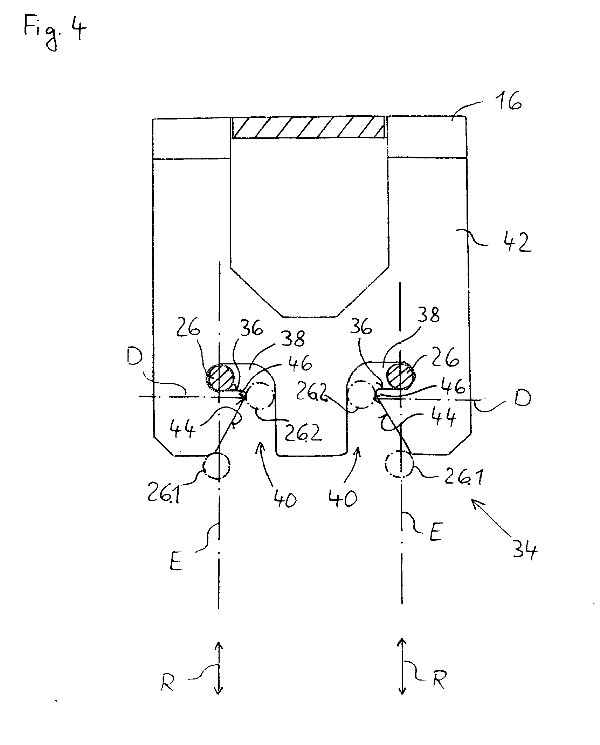

Wie aus Fig. 4 zu entnehmen ist, sind die Anschlagflächen 36 durch Hintergreifaufnahmen 38 gebildet, die einander gegenüber liegend zueinander geöffnet sind. Die Hintergreifaufnahmen 38 sind dabei wiederum jeweils durch eine im Wesentlichen L-förmige Ausnehmung 40 in einem zweiten Schenkel 42 des Aufnahmeteils 16 gebildet. Diese Ausnehmung 40 bildet jeweils eine Rampenfläche 44 aus, die sich von einer Schwenkebene E weg erstreckt, in der der jeweilige Federbügel 26 in Schwenkrichtung R verschwenkt wird, und die über eine abgerundete Ecke 46 mit der jeweiligen Hintergreifaufnahme 38 verbunden ist.

Beim Verschwenken des Schliesselementes 24 entlang der Schwenkrichtung R in die Offenstellung kommen somit die Federbügel 26, wie durch Position 26.1 dargestellt, in Anlage mit der Rampenfläche 44. Durch weiteres Verschwenken werden die Federbügel 26, wie durch die weitere Position 26.2 angedeutet, durch die Rampenfläche 44 von der Schwenkebene E weg gedrückt, bis sie auf Höhe der jeweiligen Hintergreifaufnahme 38 stehen. Infolge ihrer elastischen Rückstellkräfte werden sie nun wieder in Richtung ihrer Schwenkebene zurückverformt und liegen somit in den Hintergreifaufnahmen 38 in Schwenkrichtung R zur Offenposition an den Anschlagflächen 36 an.

In dieser Position kann sich das Schliesselement 24 somit an beiden Schenkeln 20, 42 des Aufnahmeteils 16 abstützen, um die Trägerschiene 4, wie in Fig. 3 dargestellt, zu halten.

Um das Schliesselement 24 aus der in Fig. 3 und 4 dargestellten Schliessposition in die Offenposition nach Fig. 1 verbringen zu können, werden die beiden Federbügel 26 beispielsweise über ihre Betätigungsabschnitte 30 durch mit einer Hand aufgebrachten entgegen gesetzten Druck D senkrecht zur Schwenkebene E soweit gegeneinander gedrückt, dass sie in Schwenkrichtung R nicht mehr an den Anschlagflächen 36 anliegen und somit gemäss Position 26.2 in Fig. 4 aus den Hintergreifaufnahmen 38 heraus bewegt werden können.

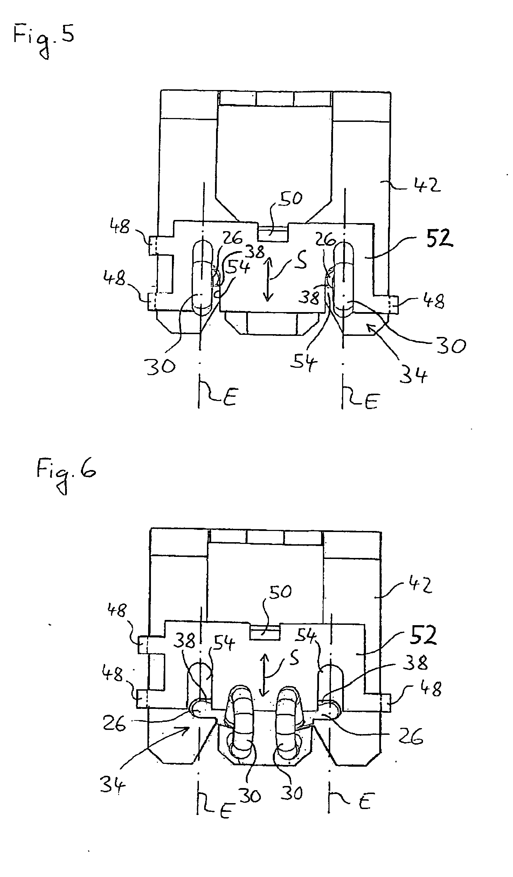

Um ein versehentliches Lösen der Festlegeanordnung 34 zu vermeiden, ist an dieser, wie in Fig. 5 und 6 dargestellt, zusätzlich ein Sicherungsmittel 46 in Form eines Stanz-Biege-Bleches vorgesehen. Dieses ist über Führungsflansche 48 zwischen einer Sicherungsposition gemäss Fig. 5 und einer Entsicherungsposition gemäss Fig. 6 verschiebbar an dem zweiten Schenkel 42 gehalten. Ein Anlegeflansch 50 verhindert zudem ein ungewolltes Lösen des Sicherungsmittels 52 vom zweiten Schenkel 42.

Das Sicherungsmittel 52 weist auf Höhe der Anschlagflächen 36 jeweils einen Sicherungsschlitz 54 auf, der in der Sicherungsposition über den an der jeweiligen Anschlagfläche 36 anliegenden Federbügel 26 geschoben ist. Die Sicherungsschlitze 54 verhindern nun eine Verlagerung der Federbügel 26 senkrecht zur jeweiligen Schwenkebene E, die ausreichend wäre, um den jeweiligen Federbügel 26 aus der Hintergreifaufnahme 38 heraus zu bewegen.

Wenn das Schliesselement 24 wieder in die Offenposition verlagert werden soll, wird das Sicherungsmittel 52 entlang einer Schieberichtung S von den Federbügeln 26 weg in die Entsicherungsposition nach Fig. 6 verschoben. Daraufhin können die Federbügel 26 durch händisches Zusammendrücken der beiden Betätigungsabschnitte 30 wieder von den Anschlagflächen 36 weg bewegt werden.

Umgekehrt kommen die Federbügel 26 beim Verschwenken des Schliesselementes 24 in die Schliessposition erst dann in Anlage mit dem Sicherungsmittel 52, wenn die Federbügel 26 bereits durch die Rampenflächen 44 aus der Schwenkebene E heraus gedrückt sind. Hierdurch nehmen die Sicherungsschlitze 54 erst dann die Federbügel 26 auf, wenn diese in den Hintergreifaufnahmen 38 positioniert sind. Somit wird das Sicherungsmittel 52 bei diesem Vorgang durch die Federbügel 26 selbsttätig aus der Sicherungsposition in die Entsicherungsposition und wieder zurück in die Sicherungsposition bewegt, ohne dass es händisch betätigt werden muss.

## Patentansprüche

1. Halterungsvorrichtung (2)
mit einem Trägerelement (6), das an einem Konstruktionsteil (10) festlegbar ist,
mit einem Schliesselement (24), das gegenüber dem Trägerelement (6) zwischen einer Schliessposition, in der es zusammen mit dem Trägerelement (6) einen Aufnahmequerschnitt (18) umfänglich umschliesst, und einer Offenposition, in der der Aufnahmequerschnitt (18) umfänglich nach Aussen geöffnet ist, in einer Schwenkebene (E) verschwenkbar ist, und
mit einer lösbaren Festlegeanordnung (34), mittels der das Schliesselement (24) in der Schliessposition festlegbar ist und die bewegliche Festlegemittel am Schliesselement (24) und feste Festlegemittel am Trägerelement (6) aufweist,
wobei das Schliesselement (24) wenigstens an den beweglichen Festlegemitteln quer zur Schwenkebene (E) verlagerbar ist,
**dadurch gekennzeichnet, dass** an dem Trägerelement (6) ein Sicherungsmittel (52) beweglich gehalten ist, das in einer Sicherungsposition einen quer zur Schwenkebene (E) wirkenden Anschlag für das Schliesselement (24) bildet.

2. Halterungsvorrichtung nach Anspruch 1, **dadurch gekennzeichnet, dass** die beweglichen Festlegemittel einen Federbügel (26) aufweisen, der um eine senkrecht zur Schwenkebene (E) stehende Schwenkachse (A) verdrehbar gehalten und von der Schwenkebene (E) weg elastisch verformbar ist.

3. Halterungsvorrichtung nach Anspruch 2, **dadurch gekennzeichnet, dass** die festen Festlegemittel am Trägerelement (6) eine die Schwenkebene (E) schneidende Anschlagfläche (36) aufweisen, an die der Federbügel (26) in Richtung der Offenposition anlegbar ist.

4. Halterungsvorrichtung nach Anspruch 3, **dadurch gekennzeichnet, dass** an den festen Festlegemitteln eine Rampenfläche (44) vorgesehen ist, die sich schräg von der Schwenkebene (E) weg erstreckt und mit der Anschlagfläche (36) verbunden ist.

5. Halterungsvorrichtung nach einem der Ansprüche 3 oder 4, **dadurch gekennzeichnet, dass** das Schliesselement (24) einen zweiten Federbügel (26) aufweist, der an eine zweite Anschlagfläche (36) anlegbar ist, wobei beide Anschlagflächen (36) durch zueinander geöffnete Hintergreifaufnahmen (38) gebildet sind.

6. Halterungsvorrichtung nach einem der Ansprüche 1 bis 5, **dadurch gekennzeichnet, dass** das Schliesselement (24) aus einem Federstahldraht gebildet ist.

7. Halterungsvorrichtung nach einem der Ansprüche 1 bis 6, **dadurch gekennzeichnet, dass** sich das Schliesselement (24) über eine vollständige Seitenlänge des Aufnahmeraumes (18) erstreckt.

## Claims

1. Mounting device (2)
comprising a support element (6) which is fixable at a structural element (10),
also comprising a closing element (24) which is pivotable in a pivot plane (E) relative to the support element (6) between a closed position in which, together with the support element (6), said closing element encloses a receptacle cross-section (18) at the periphery thereof, and an open position in which the receptacle cross-section (18) is outwardly opened at the periphery thereof, and
also comprising a releasable fixing arrangement (34) by means of which the closing element (24) can be fixed in the closed position and which comprises movable fixing means at the closing element (24) and immobile fixing means at the support element (6),
wherein the closing element (24) is displaceable at least at the movable fixing means transversely to the pivot plane (E),
**characterised in that** a securing means (52), which in a securing position forms a stop acting transversely to the pivot plane (E) for the closing element (24), is movably held at the support element (6).

2. Mounting device according to claim 1, **characterised in that** the movable fixing means has a spring clip (26), which is held rotatable about a pivot axis (A) arranged perpendicularly to the pivot plane (E) and is elastically deformable away from the pivot plane (E).

3. Mounting device according to claim 2, **characterised in that** the immobile fixing means at the support element (6) comprise a stop surface (36) which intersects the pivot plane (E) and against which the spring clip (26) can be placed in the direction of the open position.

4. Mounting device according to claim 3, **characterised in that**, provided at the immobile fixing means is a ramp surface (44) which extends obliquely away from the pivot plane (E) and is connected to the stop surface (36).

5. Mounting device according to one of the claims 3 or 4, **characterised in that** the closing element (24) comprises a second spring clip (26) which can be placed against a second stop surface (36), wherein both stop surfaces (36) are formed by undercut receptacles (38) which open toward one another.

6. Mounting device according to one of the claims 1 to 5, **characterised in that** the closing element (24) is made from a spring steel wire.

7. Mounting device according to one of the claims 1 to 6, **characterised in that** the closing element (24) extends over an entire side length of the receptacle chamber (18).

## Revendications

1. Dispositif de fixation (2) comportant :
un élément de support (6) qui peut être fixé à une pièce de construction (10),
un élément de fermeture (24) qui peut pivoter dans un plan de pivotement (E) par rapport à l'élément de support (6) entre une position fermée dans laquelle il enferme de manière circonférentielle une section transversale de réception (18) conjointement avec l'élément de support (6), et une position ouverte dans laquelle la section transversale de réception (18) est ouverte de manière circonférentielle vers l'extérieur, et
un agencement de fixation amovible (34) au moyen duquel l'élément de fermeture (24) peut être fixé dans la position fermée, et lequel agencement comporte des moyens de fixation mobiles sur l'élément de fermeture (24) et des moyens de fixation fixes sur l'élément de support (6),
dans lequel l'élément de fermeture (24) est mobile au moins sur les moyens de fixation mobiles transversalement au plan de pivotement (E),
**caractérisé en ce que** des moyens de protection (52) sont maintenus de manière mobile sur l'élément de support (6), lesquels moyens de protection forment, dans une position de protection, une butée agissant transversalement au plan de pivotement (E) pour l'élément de fermeture (24).

2. Dispositif de fixation selon la revendication 1, **caractérisé en ce que** les moyens de fixation mobiles comportent un étrier à ressort (26) qui est maintenu de manière rotative autour d'un axe de pivotement (A) perpendiculaire au plan de pivotement (E) et peut être déformé élastiquement à partir du plan de pivotement (E).

3. Dispositif de fixation selon la revendication 2, **caractérisé ce que** les moyens de fixation fixes comportent une surface de butée (36) coupant le plan de pivotement (E) sur l'élément de support (6), surface de butée sur laquelle peut porter l'étrier à ressort (26) en direction de la position ouverte.

4. Dispositif de fixation selon la revendication 3, **caractérisé en ce qu'**une surface de rampe (44) est prévue sur les moyens de fixation fixes, laquelle surface s'étend en oblique par rapport au plan de pivotement (E) et est reliée à la surface de butée (36).

5. Dispositif de fixation selon l'une quelconque des revendications 3 ou 4, **caractérisé en ce que** l'élément de fermeture (24) comporte un second étrier à ressort (26) qui peut porter sur une seconde surface de butée (36), dans lequel les deux surfaces de butée (36) sont formées par des logements de prise arrière ouverts l'un vers l'autre (38).

6. Dispositif de fixation selon l'une quelconque des revendications 1 à 5, **caractérisé en ce que** l'élément de fermeture (24) est formé à partir d'un fil d'acier à ressorts.

7. Dispositif de fixation selon l'une quelconque des revendications 1 à 6, **caractérisé en ce que** l'élément de fermeture (24) s'étend sur une longueur latérale complète de l'espace de réception (18).
